# EUROPEAN PATENT APPLICATION

(11) **EP 0 707 990 A1**
(43) Date of publication of application: **24.04.1996**
(21) Application number: 95116275.9
(22) Date of filing: 16.10.1995
(51) Int. Cl.: B60H 1/00, B60H 1/24

(54) **Air-flow control unit for vehicle ventilation systems**

(30) Priority: 20.10.1994 IT TO940205 U
(71) Applicant: FOGGINI PROGETTI S.r.l., I-10092 Beinasco Torino (IT)
(72) Inventor: Davico, Claudio, I-10094 Giaveno (Torino) (IT)
(74) Representative: Modiano, Guido, Dr.-Ing.

(57) **Abstract**

The unit comprises a body (11) that is shaped like a parallelepiped and is delimited by a front wall (11a) and by at least two side walls (11b-11c). The front wall is provided with cylindrical unions (12a-12b) that end directly with respective front air delivery vents (13a-13b), and the side walls are provided with corresponding cylindrical unions (12b-12c) for connection, by means of corresponding ducts (16c-16d), to respective lateral delivery vents (13c-13d). The front and lateral unions are provided with respective valves (18a-18b-18c-18d) for adjusting and interrupting the flow; these valves are affected by corresponding centralized controls constituted by individual rotatable knobs (20a-20b-20c-20d) that are arranged frontally below the corresponding front vents (13a-13b).

## Description

The present invention relates to a centralized unit for distributing and regulating flows of the climate-control air of motor vehicles.

More specifically, the invention relates to a centralized unit destined, in particular, to equip recent-type dashboards including the ducts for feeding and conveying the climate-control air and are the result of the superimposing and coupling of two half-shells, each half-shell being formed by molding and being provided with corresponding symmetrical recesses for delimiting said ducts after superimposing said shells.

Although it is particularly advantageous if used in new dashboards of the above mentioned half-shell type, the distribution and regulation unit according to the invention can, however, be associated with climate-control units and/or used in conventional dashboards, in which said ducts, in particular those for conveying the lateral flows, are at least partially constituted by individual tubes or hoses and the like that are not built into the dashboard or formed monolithically therewith.

A principal aim of the invention is to significantly simplify existing systems for distributing and regulating the central and lateral flows of the climate-control air, concentrating in a central unit the controls for opening, closing, and regulating the corresponding central and lateral ducts, and to simplify the structure of the diffusion vents, leaving them the single purpose of orientating the delivered air flow.

Another important and particular object of the invention is to provide a centralized unit that is shaped and structured so as to simplify the operations for its manufacture and assembly, with considerable economical advantages and with improved effectiveness and comfort in use.

Another important object of the invention is to provide a centralized unit that can be easily built into the above mentioned new-type dashboards, which are the result of the superimposing and fixing of two half-shells.

According to the present invention, this aim, these important objects, and others are achieved with a centralized distribution and regulation unit having the specific features stated in the appended claims.

Further characteristics and advantages of the centralized unit according to the present invention, will become apparent from the following detailed description and with reference to the accompanying drawings, given by way of non-limitative example, wherein:
figure 1 is a general exploded perspective view of the distribution and regulation unit;
figure 2 is an exploded perspective detail view, similar to figure 1, of the elements and controls for regulating said unit;
figure 3 is an exploded perspective view of a detail of figure 1;
figure 4 is an exploded perspective view of the method for inserting the unit of figure 1 in a dashboard of the type with half-shells;

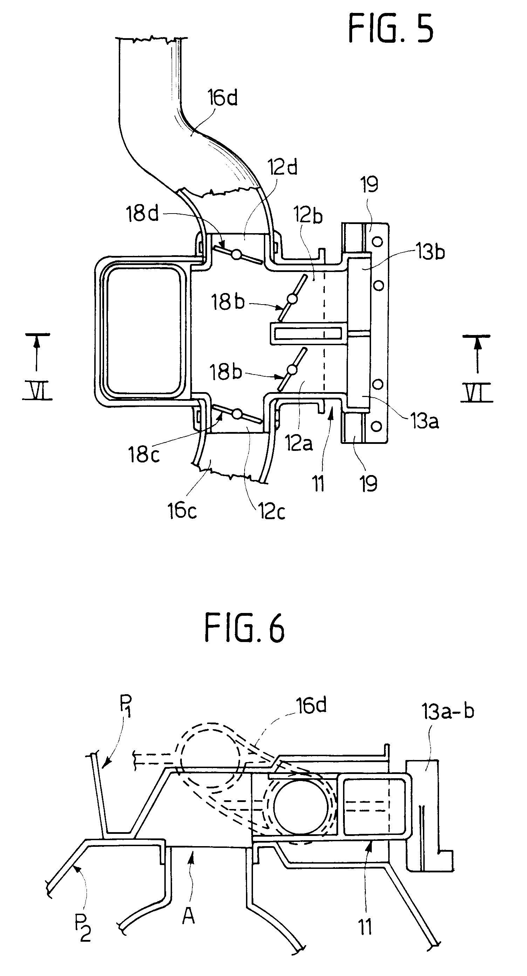

figure 5 is a schematic sectional view, taken along the plane V-V of figure 4;
figure 6 is a schematic sectional view, taken along the plane VI-VI of figure 5.

The distribution and regulation unit according to the invention, generally designated by the reference numeral 10, substantially comprises a body 11 that is shaped like a parallelepiped and is delimited by a front wall 11a and by at least two side walls 11b-11c.

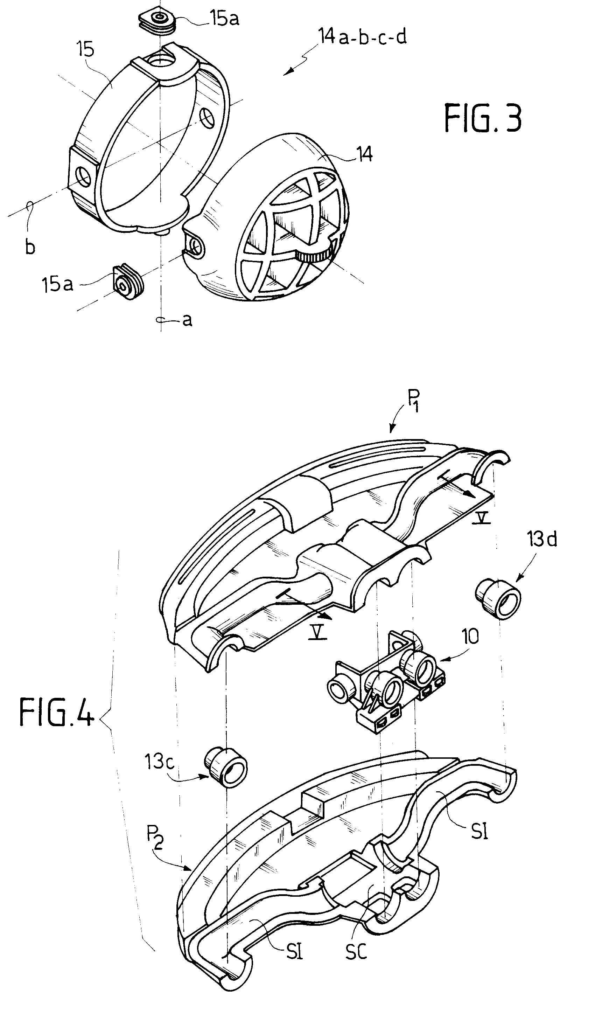

Two laterally adjacent cylindrical front unions 12a-12b are formed on the front wall 11a, and a respective lateral cylindrical union 12c-12d is formed on each side wall. The two front unions 12a-12b protrude so as to form corresponding wider cylindrical seats, forming front air delivery vents 13a-13b that include respective flow orientation grilles 14a-14b. Each grille 14a-14b can be orientated (figure 3) about two axes "a" and "b" that are mutually perpendicular and is advantageously of the known type disclosed in European Patent Application No. 94105702.8 filed April 13, 1994 in the name of the same Applicant, which comprises an intermediate ring 15 that is pivoted by means of devices 15a for braked articulation to the corresponding vent, with respect to which it oscillates about the axis "a"; the actual grille 14, which is oscillatable about the axis "b", is in turn pivoted to said ring, again by virtue of the braked articulation devices 15a.

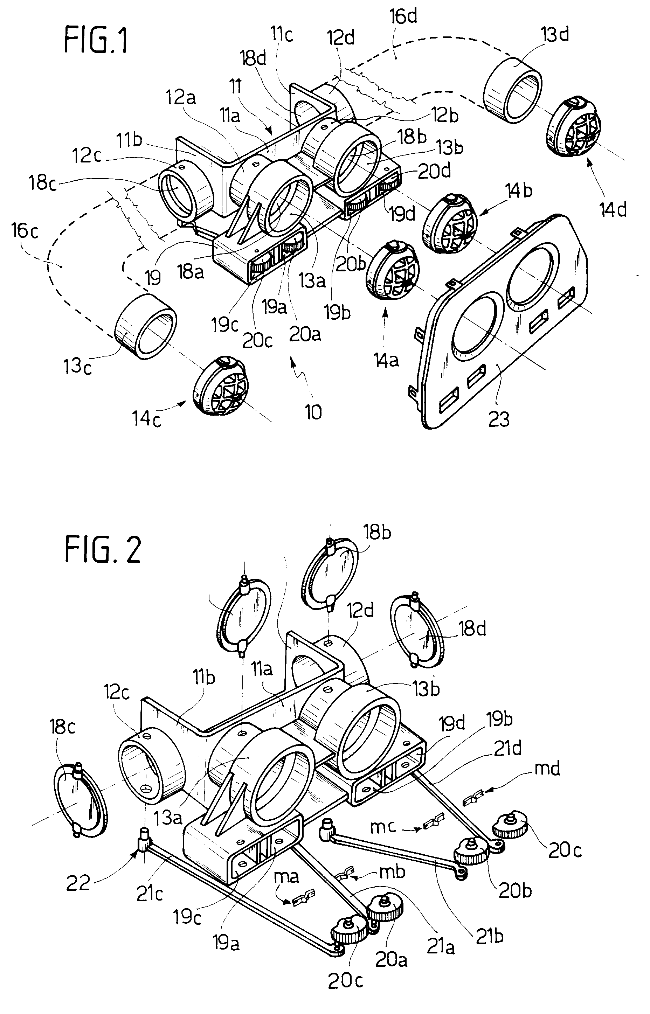

The two lateral unions 12c-12d are provided to supply the climate-control air, by means of respective connecting ducts shown schematically in figure 1 and designated by the reference numerals 16c-16d, to respective lateral vents 13c-13d also provided with orientation grilles 14c-14d that are fully identical to the grilles 14a-14b of the front vents.

Each front and lateral union is provided with respective valves, respectively designated by the reference numerals 18a-18b-18c-18d, for adjusting and interrupting the air flow. Said valves, of the butterfly type, are actuated by respective centralized controls arranged on the front side of the unit 10. For this purpose, two boxes 19 are provided below the front vents 13a-13b; each box is provided with two seats 19a-19b and 19c-19d for containing respective rotatable knobs 20a-20b and 20c-20d. The first two knobs are provided to regulate the opening, closure, and adjustment of the valves 18a-18b of the front vents; the additional two knobs are provided to correspondingly regulate the position of the valves 18c-18d of the lateral vents.

For this purpose, each rotatable knob, which is affected by a corresponding position-marking spring ma-mb-mc-md, is provided with an eccentric pivot connected, by means of respective linkages 21a-21b, 21c-21d, to corresponding actuation rods, such as 22, that are rigidly coupled to the respective valves. An optional front fascia 23, connectable to the dashboard in a snap-together manner, is provided for aesthetic purposes as well as to conceal and protect the above mentioned unit 10.

In figure 4, according to a particularly advantageous operating configuration, the unit 10 is built into a dashboard of the known type produced by superimposing and mutually connecting two half-shells P1-P2 that are individually obtained by monolithic molding. A central seat SC, provided with an air intake A and meant to accommodate the unit 10 complete with front grilles and controls, and respective half-recesses SI, meant to constitute the connecting ducts 16c-16d, are provided in dashboards of this type and are partially formed in both half-shells P1-P2; prior to the assembly of the two half-shells P1-P2, the lateral vents 13c-13d, complete with the respective orientation grilles, are provided at the ends of said half-recesses. Once the half-shells have been assembled, the unit 10 is fully built into the dashboard and does not require additional work steps for completion and/or assembly.

The effects of the present invention of course also apply to models that achieve equal utility by using the same innovative concept.

In particular, the scope of the present invention includes the arrangement in which, if required by particular utilization requirements, the valves 18a-18b-18c-18d are fully or partially affected by the action of respective reversible electric actuation motors that are individually controlled by corresponding switches located frontally in replacement of the knobs 20, said arrangement being equivalent in terms of the stated aim and objects.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Centralized unit (10) for distributing and regulating the climate-control air of motor vehicles, particularly for dashboards with pre-molded half-shells (P1-P2), characterized in that it comprises a body (11) that is shaped like a parallelepiped and is delimited by a front wall (11a) and by at least two side walls (11b-11c); in that the front wall is provided with cylindrical unions (12a-12b) that end directly with respective front air delivery vents (13a-13b); in that the side walls are provided with corresponding cylindrical unions (12b-12c) for connection, by means of corresponding ducts (16c-16d), to respective lateral delivery vents (13c-13d); and in that the front and lateral unions are provided with respective valves (18a-18b-18c-18d) for adjusting and interrupting the flow, said valves being affected by corresponding centralized controls (20a-20b-20c-20d) arranged frontally below the corresponding front vents (13a-13b).

2. Centralized unit according to claim 1, characterized in that the front vents (13a-13b) and the lateral vents (13c-13d) are provided with corresponding orientatable grilles (14a-14b-14c-14d), and in that each grille is of the type comprising an intermediate ring (15) that is articulated to the vent and can be orientated about a first axis (a), to which the actual grille is in turn articulated, said grille being orientatable about a second axis (b) that lies at right angles to the first one.

3. Centralized unit according to claims 1 and 2, characterized in that each one of the actuation knobs (20a-20b-20c-20d) is rotatably contained in a respective front seat (19a-19b-19c-19d) of the body (11) of the unit; and in that said seats are arranged side by side in pairs and each pair is formed in a corresponding box (19); said boxes being arranged below the front vents (13a-13b).

4. Centralized unit according to the preceding claims, characterized in that each knob actuates the respective interruption and regulation valve with the interposition of a corresponding linkage (21a-21b-21c-21d), and in that the linkages are articulated to an eccentric pivot of the knob at one end and to a valve actuation rod (22) at the other end.

5. Centralized unit according to the preceding claims, built-in, by pre-assembly, in a dashboard produced by superimposing half-shells (P1-P2) obtained by molding; wherein the body (11) of the unit with the front vents (13a-13b) is contained in a central seat (SC) provided by molding partially on both half-shells; and wherein the lateral vents (13c-13d) are located at the end of respective connecting ducts (16c-16d) produced by superimposing half-recesses (SI) that are also produced by molding in said half-shells.

6. Centralized unit according to claim 1, characterized in that said centralized controls (20a,20b,20c,20d) are constituted by individual rotatable knobs (20a,20b,20c,20d).
